# EUROPEAN PATENT SPECIFICATION

(11) **EP 3 448 959 B1**
(45) Date of publication and mention of the grant of the patent: **22.11.2023**
(21) Application number: 17790196.4
(22) Date of filing: 24.04.2017
(51) Int. Cl.: C09K 21/00, C09K 21/14, D01F 6/92, D01F 1/07, C08G 69/14, C08K 5/00, C08L 77/02

(54) **USE OF POLYMER COMPOSITIONS FOR FLAME RETARDANCY AND/OR IMPROVED MELT DRIPPING PROPERTIES**
VERWENDUNG VON POLYMERZUSAMMENSETZUNGEN FÜR FLAMMHEMMENDE UND/ODER VERBESSERTE SCHMELZTROPFEIGENSCHAFTEN
UTILISATION DES COMPOSITIONS POLYMÈRES À CARACTÈRE IGNIFUGE ET/OU À PROPRIÉTÉS AMÉLIORÉES D'ÉGOUTTAGE À L'ÉTAT FONDU

(30) Priority: 24.04.2016 US 201662326820 P
(43) Date of publication of application: 06.03.2019
(73) Proprietor: QED Labs Inc, Waltham, MA 02451 (US)
(72) Inventor: JOGIKALMATH, Gangadhar, Chestnut Hill, MA 02467 (US); VISENTIN, Adam, Billerica, Massachusetts 01821 (US); RAMAPPA, Deepak Arabagatte, Somerville, MA 02144 (US)
(74) Representative: Brantsandpatents bv
(86) International application number: PCT/US2017/029168
(87) International publication number: WO 2017/189446

(56) References cited:
- EP-A1- 2 444 387
- WO-A1-2016/057072
- WO-A2-2015/109135
- CN-B- 102 863 611
- US-A- 4 147 741
- US-A- 4 147 741

## Description

### FIELD OF THE DISCLOSURE

The present disclosure relates to use of a composition, and methods providing flame and fire protection, including fabrics with improved melt dripping properties.

### BACKGROUND OF THE DISCLOSURE

Flame retardancy and voidance of melt dripping are two important properties in articles such as fabrics. US4147741, for instance, describes a composition comprising a resinous polymer of propylene and a cross-linker, wherein crosslinking of the polymer is only achieved upon exposure of the composition to fire, providing the polymer with fire retarding properties. In addition, WO2016057072 describes treatment of the surface of a polyolefin or other inert fiber with a flame retardant sheath that enables production of high mechanical strength fibers (i.e., no flame retardants in the core of the fiber) while the surface offers inhibitory action towards propagating flame.

Flame retardants are chemicals that resist the spread of fire and are used in, for example, thermoplastics, textiles, and coatings. Typically, flame retardants are halogenated (e.g., brominated) or phosphate based. However, these flame retardant and fire protection materials are generally inefficient or have negative impacts on the environment. For example, halogenated flame retardants, such as brominated flame retardants, are persistent, bio-accumulative, and toxic to both humans and the environment. Brominated flame retardants are suspected of causing negative neurobehavioral effects and endocrine disruption. Brominated flame retardants also release toxic gases which can cause more deaths than fire itself.

Non-halogenated flame retardants, such as phosphate based flame retardants, are generally non-toxic and environmentally friendly. However, non-halogenated flame retardant additives currently used in the market are less efficient than halogenated flame retardants. Generally, these phosphate based flame retardants require high loading (i.e., doses/volumes) which reduces efficacy. Such high doses may compromise the mechanical properties, thereby increasing susceptibility to failure of injection molded parts and other materials to which the phosphate based flame retardants are applied. Phosphate flame retardants also tend to leach out of the materials to the surface rendering the material vulnerable to fire.

Non-halogenated flame retardant additives currently used in the market are less efficient than halogenated flame retardants. For example, polymers may contain between 30% and 60% of phosphorus based flame retardant substances where only 15% of halogenated flame retardants may be sufficient. This higher percentage can compromise the structural integrity of the article and cause the properties of the final product to deteriorate.

Melt dripping of plastics or fabrics when exposed to flame or fire is also undesirable. Melt drips on the skin of a wearer can cause grievous bodily injury because a hot, sticky, melted substance formed from the plastic or fabric can cause localized and extremely severe burns. For example, the polyamide (such as nylon-6 and nylon-6,6) uniforms for defense personnel show undesirable melt dripping problems when exposed to flame. Other polyamides are end-capped and crosslinked to improve the mechanical strength of nylon, for instance polyamide 66 (PA66) end-capped with MEPA (methylethynyl phthalic anhydride) and PEPA (Phenylethynyl phtalic anhydride), as described in EP2444387. However, EP2444387 does not refer to fire retarding and/or melt dripping properties of the end-capped composition.

Therefore, it is desirable to have fibers, fabrics, and other articles that show improved flame retardancy and that are capable of lowered melt dripping when exposed to flame.

### BRIEF SUMMARY OF THE DISCLOSURE

The above objects are met by use of a composition for the improvement of flame retardancy and/or for the reduction or elimination of melt dripping , articles, and methods disclosed herein. The invention is set out in the appended set of claims.

### DESCRIPTION OF THE DRAWINGS

For a fuller understanding of the nature and objects of the disclosure, reference should be made to the following detailed description taken in conjunction with the accompanying drawings, in which:

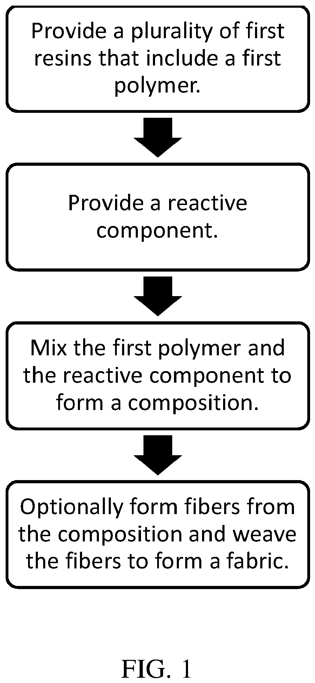

FIG. 1 is a flowchart in accordance with an embodiment of the present disclosure.

### DETAILED DESCRIPTION OF THE DISCLOSURE

The present disclosure may be understood more readily by reference to the following description taken in connection with the accompanying figures and examples, all of which form a part of this disclosure. It is to be understood that this disclosure is not limited to the specific products, methods, conditions, or parameters described and/or shown herein, and that the terminology used herein is for the purpose of describing particular embodiments by way of example only and is not intended to be limiting of any claim. Similarly, unless specifically otherwise stated, any description as to a possible mechanism or mode of action or reason for improvement is meant to be illustrative only, and the disclosure herein is not to be constrained by the correctness or incorrectness of any such suggested mechanism or mode of action or reason for improvement. Throughout this text, it is recognized that the descriptions refer to compositions and methods of making and using the compositions. That is, where the disclosure describes and/or claims a feature or embodiment associated with a composition or apparatus or a method of making or using a composition or apparatus, it is appreciated that such a description and/or claim is intended to extend these features or embodiment to embodiments in each of these contexts (i.e., composition, apparatus, and methods of using).

In the present disclosure the singular forms "a," "an," and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

When a value is expressed as an approximation by use of the descriptor "about," it will be understood that the particular value forms another embodiment. In general, use of the term "about" indicates approximations that can vary depending on the desired properties sought to be obtained by the disclosed subject matter and is to be interpreted in the specific context in which it is used, based on its function. The person skilled in the art will be able to interpret this as a matter of routine. In some cases, the number of significant figures used for a particular value may be one non-limiting method of determining the extent of the word "about." In other cases, the gradations used in a series of values may be used to determine the intended range available to the term "about" for each value. Where present, all ranges are inclusive and combinable. That is, references to values stated in ranges include every value within that range.

In general, when a range is presented, all combinations of that range are disclosed. For example, 1 to 4 includes not only 1 to 4 but also 1 to 2, 1 to 3, 2 to 3, 2 to 4, and 3 to 4.

It is to be appreciated that certain features of the disclosure which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the disclosure that are, for brevity, described in the context of a single embodiment, may also be provided separately or in any sub-combination. Finally, while an embodiment may be described as part of a series of steps or part of a more general structure, each said step may also be considered an independent embodiment in itself, combinable with others.

When a list is presented, unless stated otherwise, it is to be understood that each individual element of that list, and every combination of that list, is a separate embodiment. For example, a list of embodiments presented as "A, B, or C" is to be interpreted as including the embodiments, "A," "B," "C," "A or B," "A or C," "B or C," or "A, B, or C."

Melt dripping and flammability of articles such as fabrics when exposed to flame can be problematic. For example, fabrics made of nylon can melt drip when aflame and cause grievous injuries to people wearing them. Though flame retardant systems are used in nylon, none of them have been able to successfully reduce or stop melt dripping. The embodiments described herein can be used to reduce or eliminate melt drips when fabrics or articles made of nylon ("the first polymer") encounter flame. It is expected that compositions with crosslinking occurring when exposed to flame will resist dripping (due to high viscosity) and have a high tendency to form char.

Crosslinking of a reactive component added to the fiber spinning melt is encouraged to form an interpenetrating network with the nylon. The cross-linking enhances the viscosity of the material when aflame, potentially reducing the melt drips. The crosslinking may occur in the polymer or may occur between the reactive component and the polymer. An interpenetrating network can be two crosslinked polymer networks physically intertwined with each other without actually having chemical connections between the two.

In a composition with the polymer, the reactive components are in a range from 0.1% to 10% by weight of the polymer, including all values to the 0.1% and ranges between. For example, the reactive components is in a range from 0.1% to 2.0%, 0.1% to 1.5%, 0.1% to 1.0%, or 0.1% to 0.5% by weight of the polymer.

While the first polymer or the first polymer and the reactive component can crosslink upon exposure to flame, the first polymer or the first polymer and the reactive component may not react at a melting temperature of the first polymer. For example, the first polymer or the first polymer and the reactive component may not crosslink at the melting temperature of the first polymer. The degree of such crosslinking at the melting temperature may be 0%, less than 0.5%, less than 1%, less than 2%, less than 5%, or less than 10%.

If the polymer (nylon) is crosslinked prior to melt spinning or during melt spinning, the resulting increase in viscosity affects how fibers are made and their eventual mechanical properties by reducing the drawability and reducing the ability to draw very fine thin fibers. The crosslinking of the polymer (nylon) therefore should happen in the fiber when it is exposed to flame. Such a system will enable the high throughput production of fine fibers with excellent mechanical properties.

Many condensation polymers, such as nylon, have reactive end groups such as amine, carboxyl, hydroxyl, or other end groups. These functional groups can be crosslinked between neighboring polymers to form a network that resists flammability.

Such crosslinking can be configured to happen after production of fibers and/or during exposure to flame. Many polymers have a melting temperature at a value from approximately 120 °C to 300 °C, though other values are possible. Flame exposure can involve a temperature from approximately 400 °C to 800 °C.

In an embodiment, the polymer chain ends can be modified by the use of reactive components that react with each other at very high temperatures above the melting temperature of the polymer, such as temperatures that are encountered during exposure to flame. This enables production of fibers at melting temperatures of the polymers without occurrence of crosslinking during such processing. The reactive component are reactively coupled to the chain ends. These functional molecules contain, for example, a triple bond which activates at temperatures above 300 °C which is higher than the melting temperature of most polymers. When exposed to flame, the reaction can occur at a temperature above 350 °C. The crosslinking occurs and forms a flame resistant composition. As such, the reactive component includes a functional group selected from the group consisting of an epoxy, an anhydride, an amine, an isocyanate, and a hydroxyl. Examples include 4-(phenylethynyl) phthalic anhydride. Other triple bond containing aldehydes, epoxy, and amine functional molecules may be used.

The functional groups of the polymers are blocked or passivated by the use of monofunctional small molecules such that the polymers are rendered inert to reaction with crosslinking molecules until exposure to flame. Such monofunctional molecules called passivators, which are examples of reactive components, can have complementary functional groups to that of end groups of polymer chains to be modified such that the reaction between such groups may result in a covalent linkage. These reactive components may be interstitial additives until exposure to flame. Upon exposure to flame, the polymer breaks down and splits into fragments with reactive ends (e.g., non-passivated ends) that react with the reactive component to form a network interpenetrating polymer that enhances molecular weight and viscosity. In another embodiment such complementary functional groups may interact ionically or via van der waals forces or via pi-pi stacking of aromatic groups. For example, nylon has amine and acid groups at its chain ends. Any monofunctional molecule that can react with either amine or acid group can render nylon inert or "passivate" it. Examples include monofunctional epoxy, monofunctional anhydride, monofunctional acid chloride molecules, or other materials. Examples of epoxy based passivators include C₈-C₁₀- glycidyl ether, cresyl glycidyl ether, nonyl phenyl glycidyl ether, phenyl glycidyl ether, pentaerythritol glycidyl ether, and sorbitol glycidyl ether. Anhydride based passivators include anhydrides of polyolefins such as maleated polypropylene, maleated waxes, maleic anhydride, benzoic anhydride, or succinic anhydride. Depending on the chain end functional group, an appropriate passivator may be chosen based on the following pairs: amine and acids, amine and epoxide, amine and anhydride, amine and isocyanate, amine and aldehyde, amine and alkyl halide, amine and alkyl sulfonate, amine and thiol, epoxide and anhydride, epoxide and hydroxyl, or epoxide and acid.

In another embodiment, the crosslinker is chosen such that it is stable and reactive during exposure to flame. When exposed to flame most condensation polymers undergo chain scission, including those that are end capped (or passivated) with reactive molecules (passivators). Such chain scission then opens up fresh functional groups able to react with the temperature stable crosslinker. Such reactions would then result in a densely crosslinked network which forms a stable front against flame propagation and may exhibit self-extinguishing properties. In an example, a nylon molecule is passivated as discussed above. The nylon, when mixed with a crosslinker that can react and crosslink nylon, does not react with nylon due to the nylon being inert (passivated). But when such composition is exposed to high temperature (e.g., a flame), the nylon starts disintegrating and exposes acid and amine groups. For instance, every time a nylon molecule is broken, two chain ends which have acid and amine groups may be formed. The acid and amine groups can then react with the crosslinker that has stayed stable throughout the exposure to flame because it is a stable molecule.

In an embodiment, nylon molecules with end groups such as amine and carboxyl can be passivated by the use of monofunctional epoxy or anhydride functionalized molecules (passivator) such as ERISYS GE-7 available by CVC Chemicals, which is the monoglycidyl ether of a naturally occurring C8-C10 aliphatic alcohol. A proper molar addition of the passivator molecule renders the amines and or the carboxyl end groups of the nylon unreactive by covalently bonding to nylon. Such passivated nylon could then be used in conjunction with other reactive molecules to create flame retardant polymers.

In an embodiment, an epoxy functional crosslinker with more than one epoxy group is added as a reactive component to the passivated nylon melt during fiber spinning. An epoxy crosslinker such as diglycidyl ether of polyethyleneoxide can be used to crosslink the nylon molecules. In another embodiment, epoxy modified 9,10-dihydro-9-oxy-10-phosphaphenanthrene-10-oxide (DOPO) flame retardant molecules from Struktol can be used as a crosslinker. In another embodiment, a benzoic dianhydride such as benzophenone-3,3',4,4'-tetracarboxylic dianhydride molecule can be added to the passivated nylon melt and made into fibers. When such passivated nylon fibers containing active crosslinker molecules are exposed to flame, the resulting chain scission of the nylon at these high temperatures creates fragments that have reactive end groups caprolactone and/or caprolactam. These fragments then react with the bifunctional or multifunctional crosslinkers to create a crosslinked network that may help in preventing flame propagation and enhance char formation.

In another embodiment, an epoxy functional crosslinker with more than one epoxy group is added as a reactive component during a polymer processing step wherein polymer (e.g., nylon) is being processed with a passivator molecule first. For example, in extrusion of nylon polymer, it is mixed with a passivating molecule in the feed section first and upon melting and reaction between the passivator and nylon, in a separate downstream feedport of the extruder, a crosslinker described above is introduced. Since the nylon molecules are already rendered inert towards the crosslinker, no reaction takes place between the crosslinker and the passivated polymer. Now the crosslinker and the passivated nylon polymer are melt mixed to yield a homogeneous composition without the reaction taking place between them.

Besides caprolactone and/or caprolactam, the chain scission also can create fragments with amine and/or carboxyl reactive end groups.

In another embodiment a pentaerythritol modified with epoxy groups (such as ERISYS GE40 available by CVC Chemicals, which is epoxidized pentaerythritol) can be used as a crosslinker with passivated nylon. The presence of carbohydrate functionality in pentaerythritol enhances char formation. Thus, an ERISYS GE 40 molecule will not only crosslink the nylon fragments but also enhance char formation that may help in preventing flame propagation and enhance char formation.

With nylon polymers that contain COOH and NH₂ functionalities, multifunctional crosslinkers (that may contain at least two functional groups) that may contain epoxy, anhydride, amine, isocyanate, or hydroxyl can be used to create crosslinked networks. Other groups or species also may be contained in the crosslinker and the crosslinkers are not limited merely to those examples herein.

In another embodiment, crosslinking can be induced between merging melt fronts, such as those encountered in bicomponent fibers. These fibers are made by mixing two dissimilar materials or similar materials which contain different additives in the spinneret head to create fibers with two different materials joined together in many different shapes. This technique can be exploited to create cross-linked fibers. In one example, two streams of nylon polymer melts, one containing a regular commercial nylon resin and the other containing a passivated nylon with a bifunctional crosslinker additive such as diglycidyl ether of PEG, are brought together to form a bicomponent fiber. When the melt fronts meet, the bifunctional crosslinker present in the passivated nylon front (with which it is incapable of reacting on account of passivation step rendering the nylon inert) reacts with the amine groups of the nylon melt front that is not passivated, forming crosslinks where the melt fronts meet resulting in enhanced resistance to melt dripping in the case of a fire.

The techniques and embodiments discussed here are not only applicable to melts but also to solvent phase processes such as fiber spinning from a "dope" (polymer solution), membrane, and hollow fiber production from polymer precipitation or other processes.

Melt dripping in articles such as fabrics can be reduced or eliminated by creating a high molecular weight polymer via a crosslinking mechanism during exposure to flame. This high molecular weight polymeric structure can have low melt viscosities and, hence, a lowered chance of dripping molten drops of polymer when exposed to flame. The fibers and fabrics could further be modified with flame retardants so that they show self-extinguishing behavior when exposed to flame.

The unfunctionalized polymers may have a molecular weight from about 2,000 Da to about 200,000 Da, including all values and ranges between. Upon exposure to flame, the molecular weight of the cross-linked system may be from about 50,000 Da to about 2,000,000 Da, including all values and ranges between. However, a cross-linked system may be considered as having an infinite molecular weight instead of a finite molecular weight. When crosslinks form and if it encompasses all the molecules in the mixture, one molecule is potentially formed. Usually, this crosslinking never proceeds to completion and a mix of very high molecular weight polymers are formed by crosslinking.

In an example, the cross-linked system has a melt viscosity from about 50 cps to about 20,000 cps, including all values to the 1 cps and ranges between. Viscosity increases with molecular weight. If all the polymer chains are connected via crosslinking, then the material will cease to be a thermoplastic that is capable of melting. Instead, the material turns into a thermoset that will char on exposure to flame instead of melting.

Crosslinking can be induced during fiber production by mixing two polymers containing complementary functional groups capable of reacting with each other. Crosslinking also can occur when the produced polymer articles/fabrics are exposed to flame. The crosslinking can be initiated at temperatures as low as about 120 °C when polyolefins are involved or as up to approximately about 350 °C to about 400 °C when high temperature polymers are involved. Temperatures ranges to initiate crosslinking can be between about 110 °C to about 450 °C, including all values and ranges between, such as from about 150 °C to about 350 °C.

A catalyst may be used to accelerate the reaction between complementary functional groups. In one such example, a fiber may contain excess of anhydride groups in one resin and epoxy groups in the other resin with an accelerator, such as an imidazole like IMICURE manufactured by Air Products and Chemicals, Inc. Other catalysts are possible.

Complementary functional groups include, but are not limited to, amine and acid, amine and epoxide, amine and anhydride, amine and isocyanate, amine and aldehyde, amine and alkyl halide, amine and alkyl sulfonate, amine and thiol, epoxide and anhydride, epoxide and hydroxyl, epoxide and acid, or other combinations that affect melt dripping.

In an embodiment, a fabric is constructed using an alternate pattern of two different fibers. One has a passivated polymer additive with functional group A (such as epoxy groups) and the other has a polymer that has not been passivated and contains functional groups B (such as amines) that are at the chain ends or separately contains additive with a functional group B (such as amines) on the surface (via grafting or topical treatment) or in the bulk (added during melt blending and processing). The surface predominantly refers to the polymer-air interface, whereas the bulk predominantly refers to the interior of the fiber. Distribution in the bulk or on the surface can be uniform or non-uniform. When such a fabric or other article is exposed to flame, the functional groups A and B react with each other in the heat elevating the molecular weight of the polymer network in the fiber immediately. This increased molecular weight will, in turn, increase viscosity thereby reducing melt drip.

Some of the functional groups are expected to be present at the surface of the fibers to enhance the melt viscosity at the interfaces of the melt fronts. As a flame event results in sudden elevation of temperatures, the fibers are expected be in a melt state almost instantaneously. This can result in melting and comingling of the different polymer fibers resulting in facile reaction between the functional groups in individual fibers and leading to increased melt viscosity. Thus, the depth at which the functional groups are located in a fiber can affect melt dripping properties. This depth can be adjusted to affect melt dripping properties.

For a completely cross-linked system, the ratio of the functional groups A and B may be about 1:1. However, the ratio can be chosen such that more than about 10% of the A groups can react with B groups resulting in an increased molecular weight. In an example, about 20% to about 80% of the A groups reacted with corresponding B groups resulting in increased melt viscosity. Note that a completely cross-linked system in this instance refers to about 100%, but only rarely will the cross-linked system proceed to 100%.

In another embodiment, a fiber of the same material or a different material can be cowoven to produce a flame retardant fiber. In an example, a PET fiber, which is carrying an additive such as a multifunctional epoxy compound, can be co-woven with a nylon fiber carrying either a multi-functional amine additive (such as a polyamine) or a polyhydroxy compound with a suitable catalyst, melt-blended into the nylon fiber. The nylon may or may not be passivated by pre-reacting with monofunctional molecules. When such fibers come together (e.g., are bonded, bound, melted, contacted, etc.) and are exposed to flame/heat, they melt and fuse and the complementary functional groups react to create interpenetrating networks thereby increasing melt viscosity of the combined fiber mass and reducing the dripping characteristics of the fabric.

In another embodiment, one of the fibers containing complimentary functional groups is spiral wound on top of another fiber containing a complementary functional group capable of reacting with the first fiber. Thus when exposed to flame, both fibers fuse together generating interfacial crosslinks capable of reducing melt viscosity.

In another embodiment, two fibers are the same material with different functional groups. For example, a nylon fiber which has an additive such as a multiamine polymer can be co-woven with another passivated nylon fiber containing a polyepoxy compound or a polyanhydride compound.

In another embodiment, the woven fibers could be in the same direction (warp) or in orthogonal direction (weft). This enables the fibers to fuse along their length (warp) or at junction points when they are woven orthogonal to each other (weft).

In another embodiment, a third neutral fiber that does not melt (such as cotton or rayon) can be added as a minority component of the fabric during weaving process. The third fiber can act as scaffolding around which functionalized fibers can melt and form a high viscosity front against a flame front. The third fiber has a higher melting temperature than either the first or second fibers. Other examples of this third resin or polymer include thermoplastic polyetherimide (PEI) resins (e.g., ULTEM manufactured by SABIC), polyetheretherketone (PEEK), wool, hair, silk, or aramid (such KEVLAR or NOMEX).

In another embodiment, metallic fibers are interwoven to act as heat sinks such that heat from the flame area can be carried to a distant location where melt fusing of the functional fibers could occur, thus preventing further propagation of the flame front. These metallic fibers may be copper, ferrous materials (such as steel wool), gold, silver, nickel, manganese, aluminum, or other metals or alloys that can act as heat sinks.

In another embodiment, the multi-functional additives could themselves contain flame retardant entities such as phosphates or phosphonates (e.g., an epoxy-containing phosphorus compound) which help form char on the surface exposed to flame, thus helping self-extinguish burning articles.

In another embodiment, the two complimentary fibers or three complementary fiber/ inert fiber combination (two complimentary fibers along with one or more inert fibers) can be converted into fabric using weaving techniques or knitting techniques. In an example, the three fiber combination fabric is made by using functionalized-polyester, functionalized-nylon, and a metallic fiber or functionalized-polyester, functionalized-nylon, and a polypropylene fiber.

Complimentary fibers are those that have reactive groups which can react to link the fibers. Inert fibers are substantially devoid of such reactive groups.

In another embodiment, a nitrogen-containing synergist such as melamine can be melt blended in one fiber and a molecule containing epoxy groups in the other fiber made of passivated nylon for example. This nitrogen-containing synergist is an additive in a fiber that contains nitrogen. When these two fibers melt and fuse in the presence of a flame, a reaction is initiated between melamine and epoxy thereby creating a cross-linked network that behaves like a thermoset. As the melting temperature of melamine is 350 °C, no reaction is expected to occur with melamine during the traditional processing temperatures used for producing nylon fibers (e.g., < 300 °C). This network should reduce melt dripping and help self-extinguish the flame. In another embodiment the melamine additive could be used in conjunction with an additive containing phosphorus, as the nitrogen containing molecules synergistically aid the flame retardant properties of phosphorus containing molecules. The cross-linked network is a large molecular weight polymer with low melt viscosity. The additional bonds between chains formed during crosslinking have to be broken before stepwise degradation of chain occurs during pyrolysis. Crosslinking also increases melt viscosity of the molten polymer in the combustion zone, thereby lowering the rate of transport of the combustible pyrolysis products (e.g., flammable gases) to the flame. While melamine is discussed, urea, guanidine carbonate, melamine cyanurate, melamine formaldehyde, melamine phosphate, melamine polyphosphate, or other materials also may be used.

In another embodiment, crosslinking can be brought about between merging melt fronts such as those encountered in bicomponent fibers. These fibers are made by mixing two dissimilar materials in the spinneret head to create fibers with two different materials joined together in different shapes. Both fibers are functionalized with functional groups that are complementary. This technique can be exploited to create cross-linked fibers. In one example, not part of the present invention, two streams of PET polymer melts, one containing a nylon resin sold under the trade name ELVAMIDE (manufactured by DuPont) and the other containing a bifunctional crosslinker such as diglycidyl ether of polyethylene glycol (PEG) are brought together. The PET molecules may or may not be rendered passive by pre-reacting with a monofunctional hydroxyl containing molecule or an epoxy containing molecule. When the melt fronts meet, the reactive molecules react with one another forming crosslinks where the melt fronts meet resulting in enhanced resistance to melt dripping in the case of a fire. The bicomponent fibers could also be made of two different melt streams. For example one may be nylon and the other may be passivated PET. The PET part can contain a polyanhydride or a bifunctional crosslinker such as diglycidyl ether of PEG while the nylon part can contain no additives or low molecular weight nylon analogues such as hexamethylenetetramine (HMTA), triethylenetetramine (TETA), tetraethylenepentamine (TEPA), or pentaethylenehexamine (PEHA). When the PET and nylon melts are brought together, the crosslinking occurs between the amines and the anhydrides (or the epoxy) creating an interpenetrating network that inhibits melt dripping.

Weaving or knitting techniques capable of producing the fabric with improved melt dripping properties can be used. For example, the compositions disclosed herein can be formed into fibers and woven to make fabrics.

The invention also concerns compositions, articles (e.g., fibers or fabrics), and methods related to benign and non-toxic flame retardants in which the flame retardant molecules or particles are anchored to a polymer matrix of an article or finished product, and are stably and uniformly distributed therein. In an aspect, phosphorus containing chemicals are effective flame retardants and are used to replace brominated compounds due to the environmental concerns associated with the brominated compounds.

The compositions may include one or more phosphorous based flame retardant molecules reacted with one or more anchors, such as, oligomeric or polymeric chains having a reactive functional group, such as an epoxy functional group, a hydroxyl functional group, an anhydride functional group, a carboxyl functional group, a sulfhydryl functional group, an ester functional group, an ether functional group, and other functional groups of the type, or combinations thereof, contained therein, forming a modified flame retardant or conjugate. The modified flame retardant may be incorporated into a polymer matrix, via bonding or physical entanglement, and used to impart flame retardant properties to a final product, such as paints, textiles, coatings, and other articles.

In another embodiment, the crosslinking and network formation can be initiated by the use of molecules that react at very high temperatures, such as those encountered in flames.

In an embodiment, compounds containing N=N such as azo compounds can be reacted with functional ends of polymers such as nylon, which contain reactive functional groups such as amines, carboxyls, hydroxyls, or other functional groups. Such compounds are examples of reactive components. Such end modified polymers can then be converted into articles such as fibers and moldings using conventional processing techniques. When such articles are exposed to flames, a thermally initiated radical reaction occurs between neighboring azo functional groups creating a network of crosslinked polymers.

In an example, an azo molecule with a monofunctional reactive group reacts with a polymer end group. The modified polymer may or may not become passivated through the reaction. When such polymers are exposed to flame and/or heat, the azo function group homopolymerizes to increase the crosslinking of the original polymer thereby increasing the melt polymer viscosity of the and reducing the polymer dripping characteristics.

In another embodiment, an azo molecule with multiple reactive groups reacts with multiple polymer end groups. The polymer chains are connected via crosslinking. In one example, the amine groups of Bismarck Brown Y can be reacted with the carboxylic acid terminated end group of nylon. The reacted Bismarck Brown Y may crosslink multiple polymer chains together increasing the molecular weight and viscosity of the nylon. The azo functionalized nylon may further polymerize when exposed to heat/flame through the azo reactivity to radicals formed at elevated temperatures above processing.

In another embodiment, an azo molecule with multiple numbers and identities of functional groups may react with single or multiple polymer end groups. When multiple polymer end groups are reacted, the polymer chain may connect via crosslinking. In one example, the amine groups of Trypan Blue can be reacted with the carboxylic acid terminated end group of nylon, or the acid groups of Trypan Blue can be reacted with the amine terminated end group of nylon. The reacted Trypan Blue may crosslink multiple polymer chains together increasing the molecular weight and viscosity of the nylon. The azo functionalized nylon may further polymerize when exposed to heat/flame through the azo reactivity to radicals formed at elevated temperatures above processing.

The invention is by the following experimental examples which are not intended to be limiting in nature.

### Experimental Example 1

To 452.6 g of nylon 6, molecular weight of 40,000, 1.2 g of benzoic anhydride was dry mixed for high dispersion of the powdered solids. The dry mix was fed into a twin-screw extruder and melt processed between 230 - 260 °C. The extruded strands were cooled and pelletized.

### Experimental Example 2

To 452.6 g of nylon 6, molecular weight of 40,000, 1.2 g of succinic anhydride was dry mixed for high dispersion of the powdered solids. The dry mix was fed into a twin-screw extruder and melt processed between 230 - 260 °C. The extruded strands were cooled and pelletized.

### Experimental Example 3

To 452.6 g of nylon 6, molecular weight of 40,000, 1.2 g of maleic-anhydride was dry mixed for high dispersion of the powdered solids. The dry mix was fed into a twin-screw extruder and melt processed between 230 - 260 °C. The extruded strands were cooled and pelletized.

### Experimental Example 4

To ascertain the passivation of nylon 6 by the benzoic anhydride, the pellets made in Example 1 were mixed with 2% 1,4-butanediol diglycidyl ether (ERISYS GE 21 from CVC Chemicals). The dry mix was fed into a twin-screw extruder and melt processed between 230 - 260 °C. The extruded strands were cooled and pelletized. A control sample was prepared by mixing nylon 6 which was not modified by any means with 2% 1,4-butanediol diglycidyl ether. The dry mix was fed into a twin-screw extruder and melt processed between 230 - 260 °C. The extruded strands were cooled and pelletized.

The melt flow of the pellets was measured using a Zwick melt flow index tester. The control nylon with a melt flow of 20 g/min was found to have a melt flow of 0.7 g/min after reaction with 2% 1,4-butanediol diglycidyl ether. While the passivated nylon was found to have a melt flow of 20 g/min before and after mixing and extruding with 2% 1,4-butanediol diglycidyl ether. This indicated that the passivation step did not affect the molecular weight of nylon 6 but only rendered it inert to reaction with 2% 1,4-butanediol diglycidyl ether. Whereas the control nylon6 was crosslinked when extruded with 2% 1,4-butanediol diglycidyl ether resulting in a non-flowable polymer.

### Experimental Example 5

To 452.6 g of nylon 6, molecular weight of 40,000, 1.4 g of Bismarck Brown Y, 50 % dye content, (0.3 wt% or 0.004 mol) was dry mixed for high dispersion of the powdered solids. The dry mix was fed into a twin-screw extruder and melt processed between 230 - 260 °C. The extruded strands were cooled and pelletized.

## Claims

1. Use of a composition for the improvement of flame retardancy and/or for the reduction or elimination of melt dripping comprising:
a first resin that includes a first polymer, wherein the first polymer is nylon;
a passivator, wherein the passivator renders the first polymer inert to reaction with crosslinking molecules until the exposure to flame, said passivator is a monofunctional epoxy or anhydride functionalized molecule; wherein the first polymer or the first polymer and the reactive component do not react at a melting temperature of the first polymer; and
a reactive component, wherein the reactive component is present at 0.1% to 10% by weight of the polymer, wherein the first polymer or the first polymer and the reactive component are configured to crosslink upon exposure to flame, wherein the reactive component is a crosslinking molecule, said reactive component includes a functional group selected from the group consisting of an epoxy, an anhydride, an amine, an isocyanate, and a hydroxyl,
and wherein the first polymer is configured to split into fragments with reactive ends upon the exposure to flame such that the reactive ends react with the reactive component to form a network interpenetrating polymer that enhances molecular weight and viscosity.

2. The use of claim 1, wherein the first polymers include at least one reactive end group, wherein the reactive end group is selected from the group consisting of an amine, a carboxyl, and a hydroxyl.

3. The use of any of the preceding claims, wherein chain ends of the first polymer are modified by the reactive component, wherein the chain ends are configured to react with each other upon exposure to a temperature above the melting temperature of the first polymer.

4. The use of any of the preceding claims, wherein the first polymer includes at least one functional group, and wherein the functional group is blocked or passivated such that the first polymer is rendered inert to reaction with crosslinking molecules until exposure to a temperature above the melting temperature of the first polymer.

5. The use of claim 4, wherein the reactive component is a monofunctional molecule having functional groups complementary to end groups of the first polymer.

6. The use of claim 5, wherein a reaction between the reactive component and the first polymer forms a covalent linkage.

7. The use of any of the preceding claims, wherein the reactive end groups of the fragments generated upon exposure to flame are selected from the group consisting of caprolactone and caprolactam or from the group consisting of amine and carboxyl.

8. The use of any of the preceding claims, wherein the reactive component includes a nitrogen double bond, wherein the reactive component is an azo compound, and wherein the reactive component is configured to homopolymerize upon the exposure to flame thereby increasing crosslinking of the first polymer.

9. The use of claim 8, wherein the reactive component is configured to react with multiple end groups of the first polymer upon the exposure to flame.

10. The use of any of the preceding claims, wherein the reactive component and the first polymer are configured to not react upon the exposure to flame, and wherein the first polymer is configured to only crosslink with itself upon the exposure to flame thereby forming a network interpenetrating polymer that enhances molecular weight and viscosity.

11. A fabric formed from the composition according to any of the claims 1 to 10.

12. A method comprising:
providing a first resin that include a first polymer, wherein the first polymer is nylon;
providing a passivator, wherein the passivator renders the first polymer inert to reaction with crosslinking molecules until the exposure to flame, said passivator is a monofunctional epoxy or anhydride functionalized molecule; wherein the first polymer or the first polymer and the reactive component do not react at a melting temperature of the first polymer;
providing a reactive component, wherein the reactive component is present at 0.1% to 10% by weight of the polymer, wherein the reactive component is a crosslinking molecule, said reactive component includes a functional group selected from the group consisting of an epoxy, an anhydride, an amine, an isocyanate, and a hydroxyl; and
mixing the inert first polymer and the reactive component to form a composition, wherein the first polymer or the first polymer and the reactive component are configured to crosslink upon exposure to flame, , and wherein the reactive component is an interstitial additive, and optionally, forming fibers from the composition and weaving the fibers to form a fabric.

13. The method of claim 12, wherein the mixing occurs during extrusion after passivating.

## Patentansprüche

1. Verwendung einer Zusammensetzung zur Verbesserung einer Flammhemmung und/oder zum Verringern oder Eliminieren von Schmelztropfen, Folgendes umfassend:
ein erstes Harz, das ein erstes Polymer umfasst, wobei das erste Polymer Nylon ist,
einen Passivator, wobei der Passivator das erste Polymer bis zur Flammeinwirkung inert für eine Reaktion mit Vernetzungsmolekülen macht, wobei der Passivator ein monofunktionales epoxid- oder anhydrid-funktionalisiertes Molekül ist, wobei das erste Polymer oder das erste Polymer und die reaktive Komponente bei einer Schmelztemperatur des ersten Polymers nicht reagieren, und
eine reaktive Komponente, wobei die reaktive Komponente zu 0,1 bis 10 Gew.-% des Polymers vorhanden ist, wobei das erste Polymer oder das erste Polymer und die reaktive Komponente dafür gestaltet sind, sich auf eine Flammeinwirkung hin zu vernetzen, wobei die reaktive Komponente ein Vernetzungsmolekül ist, die reaktive Komponente eine funktionale Gruppe beinhaltet, die aus der Gruppe ausgewählt ist, die aus einem Epoxid, einem Anhydrid, einem Amin, einem Isocyanat und einem Hydroxyl besteht,
und wobei das erste Polymer dafür gestaltet ist, sich auf eine Flammeinwirkung hin in Fragmente mit reaktiven Enden aufzuspalten, so dass die reaktiven Enden mit der reaktiven Komponente reagieren, um ein interpenetrierendes Polymernetzwerk zu bilden, das Molmasse und Viskosität erhöht.

2. Verwendung nach Anspruch 1, wobei das erste Polymer mindestens eine reaktive Endgruppe beinhaltet, wobei die reaktive Endgruppe aus der Gruppe ausgewählt ist, die aus einem Amin, einem Carboxyl und einem Hydroxyl besteht.

3. Verwendung nach einem der vorhergehenden Ansprüche, wobei die Kettenenden des ersten Polymers durch die reaktive Komponente modifiziert sind, wobei die Kettenenden dafür gestaltet sind, auf das Einwirken einer Temperatur über der Schmelztemperatur des ersten Polymers hin miteinander zu reagieren.

4. Verwendung nach einem der vorhergehenden Ansprüche, wobei das erste Polymer mindestens eine funktionale Gruppe beinhaltet und wobei die funktionale Gruppe derart blockiert oder passiviert ist, dass das erste Polymer für die Reaktion mit Vernetzungsmolekülen inert gemacht ist, bis eine Temperatur über der Schmelztemperatur des ersten Polymers einwirkt.

5. Verwendung nach Anspruch 4, wobei die reaktive Komponente ein monofunktionales Molekül mit funktionalen Gruppen ist, die komplementär zu Endgruppen des ersten Polymers sind.

6. Verwendung nach Anspruch 5, wobei eine Reaktion zwischen der reaktiven Komponente und dem ersten Polymer eine kovalente Verknüpfung bildet.

7. Verwendung nach einem der vorhergehenden Ansprüche, wobei die reaktiven Endgruppen der Fragmente, die auf eine Flammeinwirkung hin erzeugt werden, aus der Gruppe ausgewählt sind, die aus Caprolacton und Caprolactam besteht, oder aus der Gruppe, die aus Amin und Carboxyl besteht.

8. Verwendung nach einem der vorhergehenden Ansprüche, wobei die reaktive Komponente eine Stickstoffdoppelbindung beinhaltet, wobei die reaktive Komponente eine Azoverbindung ist, und wobei die reaktive Komponente dafür gestaltet ist, auf die Flammeinwirkung hin zu homopolymerisieren und dadurch die Vernetzung des ersten Polymers zu verstärken.

9. Verwendung nach Anspruch 8, wobei die reaktive Komponente dafür gestaltet ist, auf die Flammeinwirkung hin mit mehreren Endgruppen des ersten Polymers zu reagieren.

10. Verwendung nach einem der vorhergehenden Ansprüche, wobei die reaktive Komponente und das erste Polymer dafür gestaltet sind, auf die Flammeinwirkung hin nicht zu reagieren, und wobei das erste Polymer dafür gestaltet ist, auf die Flammeinwirkung hin sich nur mit sich selbst zu vernetzten und dadurch ein interpenetrierendes Polymernetzwerk zu bilden, das Molmasse und Viskosität erhöht.

11. Textiles Flächengebilde, gebildet aus der Zusammensetzung nach einem der Ansprüche 1 bis 10.

12. Verfahren, Folgendes umfassend:
Bereitstellen eines ersten Harzes, das ein erstes Polymer umfasst, wobei das erste Polymer Nylon ist,
Bereitstellen eines Passivators, wobei der Passivator das erste Polymer bis zur Flammeinwirkung inert für eine Reaktion mit Vernetzungsmolekülen macht, wobei der Passivator ein monofunktionales epoxid- oder anhydrid-funktionalisiertes Molekül ist, wobei das erste Polymer oder das erste Polymer und die reaktive Komponente bei einer Schmelztemperatur des ersten Polymers nicht reagieren, und
Bereitstellen einer reaktiven Komponente, wobei die reaktive Komponente zu 0,1 bis 10 Gew.-% des Polymers vorhanden ist, wobei die reaktive Komponente ein Vernetzungsmolekül ist, die reaktive Komponente eine funktionale Gruppe beinhaltet, die aus der Gruppe ausgewählt ist, die aus einem Epoxid, einem Anhydrid, einem Amin, einem Isocyanat und einem Hydroxyl besteht, und
Mischen des inerten ersten Polymers und der reaktiven Komponente, um eine Zusammensetzung zu bilden, wobei das erste Polymer oder das erste Polymer und die reaktive Komponente dafür gestaltet sind, sich auf eine Flammeinwirkung hin zu vernetzen, und wobei die reaktive Komponente ein interstitielles Additiv ist, und optional Bilden von Fasern aus der Zusammensetzung und Weben der Fasern, um ein textiles Flächengebilde zu bilden.

13. Verfahren nach Anspruch 12, wobei das Mischen während der Extrusion nach dem Passivieren erfolgt.

## Revendications

1. Utilisation d'une composition pour l'amélioration de l'ininflammabilité et/pour la réduction ou l'élimination de l'égouttage à l'état fondu comprenant :
une première résine qui comporte un premier polymère, dans laquelle le premier polymère est du nylon ;
un passivateur, dans laquelle le passivateur rend le premier polymère inerte vis-à-vis d'une réaction avec des molécules de réticulation jusqu'à l'exposition à une flamme, ledit passivateur est une molécule monofonctionnelle à fonction époxy ou anhydride ; dans laquelle le premier polymère ou le premier polymère et le composant réactif ne réagissent pas à une température de fusion du premier polymère ; et
un composant réactif, dans laquelle le composant réactif est présent à raison de 0,1 % à 10 % en poids du polymère, dans laquelle le premier polymère ou le premier polymère et le composant réactif sont configurés pour être réticulés lors de l'exposition à une flamme, dans laquelle le composant réactif est une molécule de réticulation, ledit composant réactif comporte un groupe fonctionnel choisi dans le groupe constitué d'un époxy, d'un anhydride, d'une amine, d'un isocyanate et d'un hydroxyle,
et dans laquelle le premier polymère est configuré pour se diviser en fragments ayant des extrémités réactives lors de l'exposition à une flamme de telle manière que les extrémités réactives réagissent avec le composant réactif pour former un polymère à interpénétration de réseaux qui augmente le poids moléculaire et la viscosité.

2. Utilisation selon la revendication 1, dans laquelle les premiers polymères comportent au moins un groupe d'extrémité réactive, dans laquelle le groupe d'extrémité réactive est choisi dans le groupe constitué d'une amine, d'un carboxyle et d'un hydroxyle.

3. Utilisation selon l'une quelconque des revendications précédentes, dans laquelle les extrémités de chaîne du premier polymère sont modifiées par le composant réactif, dans laquelle les extrémités de chaîne sont configurées pour réagir les unes avec les autres lors de l'exposition à une température supérieure à la température de fusion du premier polymère.

4. Utilisation selon l'une quelconque des revendications précédentes, dans laquelle le premier polymère comporte au moins un groupe fonctionnel, et dans laquelle le groupe fonctionnel est bloqué ou passivé de telle manière que le premier polymère est rendu inerte vis-à-vis d'une réaction avec des molécules de réticulation jusqu'à exposition à une température supérieure à la température de fusion du premier polymère.

5. Utilisation selon la revendication 4, dans laquelle le composant réactif est une molécule monofonctionnelle ayant des groupes fonctionnels complémentaires à des groupes d'extrémité du premier polymère.

6. Utilisation selon la revendication 5, dans laquelle une réaction entre le composant réactif et le premier polymère forme une liaison covalente.

7. Utilisation selon l'une quelconque des revendications précédentes, dans laquelle les groupes d'extrémité réactive des fragments générés lors de l'exposition à une flamme sont choisis dans le groupe constitué de la caprolactone et du caprolactame ou dans le groupe constitué d'une amine et d'un carboxyle.

8. Utilisation selon l'une quelconque des revendications précédentes, dans laquelle le composant réactif comporte une double liaison azote, dans laquelle le composant réactif est un composé azo, et dans laquelle le composant réactif est configuré pour être homopolymérisé lors de l'exposition à une flamme, augmentant ainsi la réticulation du premier polymère.

9. Utilisation selon la revendication 8, dans laquelle le composant réactif est configuré pour réagir avec de multiples groupes d'extrémité du premier polymère lors de l'exposition à une flamme.

10. Utilisation selon l'une quelconque des revendications précédentes, dans laquelle le composant réactif et le premier polymère sont configurés pour ne pas réagir lors de l'exposition à une flamme, et dans laquelle le premier polymère est configuré pour être réticulé uniquement avec lui-même lors de l'exposition à une flamme, formant ainsi un polymère à interpénétration de réseaux qui augmente le poids moléculaire et la viscosité.

11. Tissu formé à partir de la composition selon l'une quelconque des revendications 1 à 10.

12. Procédé comprenant :
la fourniture d'une première résine qui comporte un premier polymère, dans lequel le premier polymère est du nylon ;
la fourniture d'un passivateur, dans lequel le passivateur rend le premier polymère inerte vis-à-vis d'une réaction avec des molécules de réticulation jusqu'à l'exposition à une flamme, ledit passivateur est une molécule monofonctionnelle à fonction époxy ou anhydride ; dans lequel le premier polymère ou le premier polymère et le composant réactif ne réagissent pas à une température de fusion du premier polymère ;
la fourniture d'un composant réactif, dans lequel le composant réactif est présent à raison de 0,1 % à 10 % en poids du polymère, dans lequel le composant réactif est une molécule de réticulation, ledit composant réactif comporte un groupe fonctionnel choisi dans le groupe constitué d'un époxy, d'un anhydride, d'une amine, d'un isocyanate et d'un hydroxyle ; et
le mélange du premier polymère inerte et du composant réactif pour former une composition, dans lequel le premier polymère ou le premier polymère et le composant réactif sont configurés pour être réticulés lors de l'exposition à une flamme, et dans lequel le composant réactif est un additif interstitiel, et facultativement, la formation de fibres à partir de la composition et le tissage des fibres pour former un tissu.

13. Procédé selon la revendication 12, dans lequel le mélange se produit pendant l'extrusion après la passivation.
